# EUROPEAN PATENT APPLICATION

(11) **EP 3 522 514 A1**
(43) Date of publication of application: **07.08.2019**
(21) Application number: 17855976.1
(22) Date of filing: 22.09.2017
(51) Int. Cl.: H04N 5/20, G09G 5/00, G09G 5/10, G09G 5/36, H04N 21/436

(54) **ADJUSTING DEVICE, ADJUSTING METHOD, AND PROGRAM**

(30) Priority: 28.09.2016 US 201662400803 P; 10.11.2016 JP 2016219296
(71) Applicant: Panasonic Intellectual Property Management Co., Ltd., Osaka-shi, Osaka 540-6207 (JP)
(72) Inventor: KOUNO, Kazuhiko, Osaka-shi, Osaka 540-6207 (JP); NORITAKE, Toshiya, Osaka-shi, Osaka 540-6207 (JP)
(74) Representative: Vigand, Philippe
(86) International application number: PCT/JP2017/034235
(87) International publication number: WO 2018/062022

(57) **Abstract**

The present disclosure provides an adjusting device that can effectively adjust luminance of video. The adjusting device includes an acquisition unit that acquires a non-linear first video signal generated using a first opto-electronic transfer function (OETF), a converter that performs conversion processing of converting the first video signal acquired by the acquisition unit into a non-linear second video signal obtained (i) by converting the first video signal into a linear signal using an inverse characteristic of the first OETF, (ii) by performing adjusting processing including a gain change in which a relationship between an input value and an output value becomes linear on the linear signal, and (iii) by converting a post-adjustment linear signal obtained by performing the adjusting processing using a second OETF corresponding to a predetermined format, and an output unit that outputs the second video signal obtained by a conversion performed by the converter.

## Description

### TECHNICAL FIELD

The present disclosure relates to an adjusting device, an adjusting method, and a program for adjusting a video signal.

### BACKGROUND ART

PTL 1 discloses an image signal processor that improves a displayable luminance level.

### Citation List

### Patent Literature

PTL 1: Unexamined Japanese Patent Publication No. 2008-167418

### SUMMARY

However, in the technology disclosed in PTL 1, it is difficult to effectively adjust luminance of video displayed on a display device.

The present disclosure provides an adjusting device and an adjusting method for being capable of effectively adjusting the luminance of the video.

According to one aspect of the present disclosure, the adjusting device includes an acquisition unit that acquires a first video signal that is not linear and is generated using a first opto-electronic transfer function (OETF), a converter that performs conversion processing of converting the first video signal acquired by the acquisition unit into a second video signal that is not linear and is obtained (i) by converting the first video signal into a linear signal using an inverse characteristic of the first OETF, (ii) by performing adjusting processing including a gain change in which a relationship between an input value and an output value becomes linear on the linear signal, and (iii) by converting a post-adjustment linear signal obtained by performing the adjusting processing using a second OETF corresponding to a predetermined format, and an output unit that outputs the second video signal obtained by a conversion performed by the converter.

Those comprehensive or specific aspects may be implemented by a system, a device, a method, an integrated circuit, a computer program, or a computer-readable recording medium such as a CD-ROM, or may be implemented by any combination of the system, the device, the method, the integrated circuit, the computer program, and the recording medium.

According to the adjusting device and the adjusting method of the present disclosure, the luminance of the video can effectively be adjusted.

### BRIEF DESCRIPTION OF DRAWINGS

FIG. 1 is a view schematically illustrating an example of a configuration of an audio visual (AV) system according to a first exemplary embodiment.
FIG. 2A is a view illustrating an example of an electro-optical transfer function (EOTF) compatible with each of a high dynamic range (HDR) and a standard dynamic range (SDR).
FIG. 2B is a view illustrating an example of an opto-electronic transfer function (OETF) compatible with each of the HDR and the SDR.
FIG. 3 is a block diagram schematically illustrating an example of a functional configuration of an adjusting device in the first exemplary embodiment.
FIG. 4 is a schematic diagram illustrating conversion processing performed by a first converter, a second converter, and a third converter of a converter of the first exemplary embodiment.
FIG. 5 is a view illustrating a combination of a characteristic of an HDR signal input to the adjusting device and a characteristic of the HDR signal output from the adjusting device in the first exemplary embodiment.
FIG. 6 is a flowchart illustrating an example of an operation (adjusting method) of the adjusting device in the first exemplary embodiment.
FIG. 7 is a flowchart illustrating an example of the conversion processing of the first exemplary embodiment.
FIG. 8 is a view illustrating a problem.
FIG. 9 is a view illustrating an example of adjusting processing of the first exemplary embodiment.
FIG. 10 is a block diagram schematically illustrating an example of a functional configuration of an adjusting device according to a second exemplary embodiment.
FIG. 11 is a flowchart illustrating an example of an operation (adjusting method) of the adjusting device in the second exemplary embodiment.
FIG. 12 is a block diagram schematically illustrating an example of a functional configuration of an adjusting device according to a third exemplary embodiment.
FIG. 13 is a flowchart illustrating an example of the conversion processing of the third exemplary embodiment.
FIG. 14 is a block diagram schematically illustrating an example of a functional configuration of an adjusting device according to a fourth exemplary embodiment.
FIG. 15 is a flowchart illustrating an example of an operation (adjusting method) of the adjusting device of the fourth exemplary embodiment.
FIG. 16 is a block diagram schematically illustrating an example of a functional configuration of an adjusting device according to a fifth exemplary embodiment.

### DESCRIPTION OF EMBODIMENTS

### (Knowledge underlying the present invention)

The inventor of the present application has found the following problem in the image signal processor disclosed in PTL 1.

In the image signal processor disclosed in PTL 1, linear luminance is calculated in each pixel based on a linear RGB value calculated from the pixel constituting a subject image. A correction linear luminance in each pixel and a correction linear RGB value of a composite pixel in which a plurality of pixels including the pixel are composed are calculated based on the linear RGB value and the linear luminance. Display luminance and a display RGB value are calculated by performing gamma correction on the correction linear luminance and the correction linear RGB value. In this way, in the image signal processor, the linear luminance is corrected based on the correction linear RGB value, which achieves improvement of a displayable luminance level.

In recent years, a technology of displaying HDR video compatible with a high dynamic range (HDR) that is a dynamic range wider than a standard dynamic range (SDR) of conventional video described in PTL 1 on a display device such as a television (TV) has been proposed with the progress of the video technology.

However, in the HDR video, it is necessary to express the extensive dynamic range, so that high performance and new know-how are required to produce contents or to perform the display on a display device. For this reason, there are many problems in the display of the HDR video.

For example, the HDR video displayed on the display device largely depends on an audiovisual environment such as ambient brightness, luminance performance of a display, a grading environment of a video raw material, and an intention on a producer, and sometimes is differently seen. Consequently, a function of properly adjusting a variation of the display of the HDR video is required for a playback device that plays back the HDR video. However, the HDR video is produced by an inverse characteristic of a newly-defined electro-optical transfer function (EOTF) such as perceptual quantization (PQ) or hybrid log-gamma (HLG), or an opto-electronic transfer function (OETF). Thus, even if image quality adjustment used in the conventional SDR video is used, it is difficult to effectively adjust the luminance of the HDR video.

A PQ curve is the EOTF defined by SMPTE 2084 standard. The HLG is the OETF defined by ARIB-STD B67 standard, ITU-R BT. 2100 standard, and the like, and is the OETF that is compatible with the SDR-compatible OETF in a dark portion (low-luminance region).

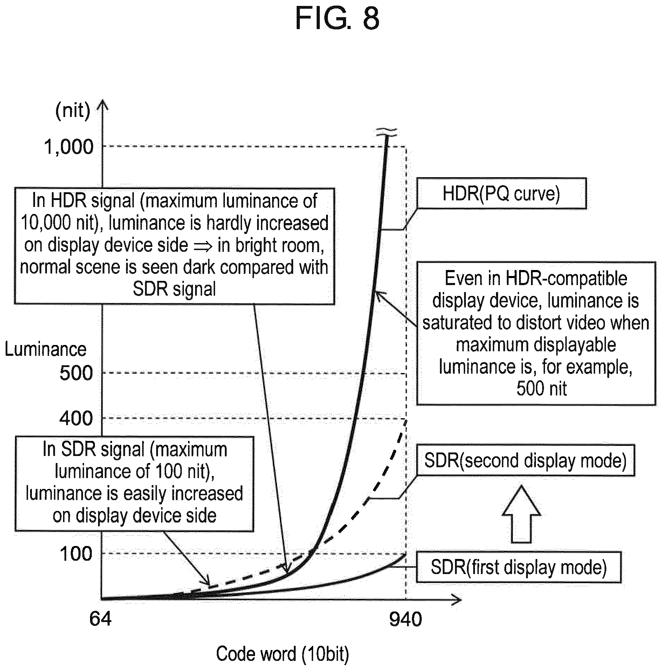

This reason will be described below with reference to FIG. 8. FIG. 8 is a view illustrating the problem.

In an SDR signal indicating the SDR video, the luminance of the video is defined by a relative luminance reference (relative value). In producing the video, frequently the SDR signal is produced based on maximum luminance of about 100 nit of the video. Frequently the maximum luminance that can be displayed by the SDR display device compatible with the display of the SDR video is larger than 100 nit (for example, 400 nit). Consequently, in the case that the SDR display device displays the SDR video, the luminance of the SDR video is enlarged up to the maximum luminance corresponding to a display mode while a relative relationship is maintained, which allows the SDR video to be displayed while the luminance is increased. For example, as illustrated in FIG. 8, it is assumed that a first display mode is a display mode in which the maximum luminance of 100 nit of the SDR video is displayed as it is, and that a second display mode is a display mode in which the maximum luminance of the SDR video is displayed while enlarged up to 400 nit. In the SDR display device, the SDR video can be displayed on the SDR display device with the luminance increased by switching the first display mode to the second display mode. The SDR signal is a video signal defined by the relative luminance reference, so that the SDR display device can display the SDR video with the luminance quadruplicated by switching the display mode as illustrated in FIG. 8. That is, in the SDR signal, the luminance cab easily be adjusted while the luminance is multiplied by a constant (K times). Thus, in the case that the SDR signal is input to the SDR display device, the SDR display device can easily display the SDR video with the luminance increased by the function of switching the display mode as illustrated in FIG. 8.

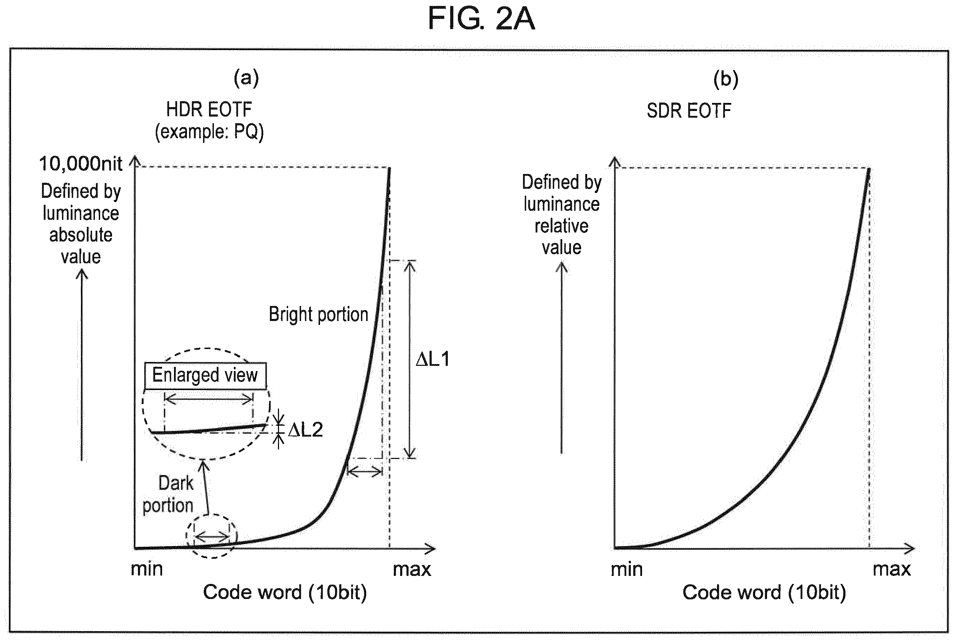

As illustrated in a part (a) of FIG. 2A described later, in the case that the HDR signal indicating the HDR video has a PQ characteristic, the HDR signal is a signal having a maximum value of 10,000 nit of the luminance, and the luminance of the video is defined by an absolute luminance reference (absolute value). On the other hand, the luminance that can be displayed by the HDR display device is about 1,000 nit at the maximum, and almost all the HDR display devices do not have a capability to display full-range luminance up to the maximum value of 10,000 nit. That is, in the case that the video of the HDR signal is displayed in a full range, the HDR display device displays the video in a distorted state because the luminance is saturated in a bright region where the luminance of the video exceeds the maximum luminance that can be displayed by the HDR display device.

In a bright audiovisual environment such as a bright room, it is difficult for a user to visually recognize the dark portion (low-luminance region) of the video. However, frequently the HDR display device has the displayable maximum luminance of 1,000 nit, and the maximum luminance value (10,000 nit) of the video of the HDR signal is hardly displayed, so that the HDR video is hardly adjusted brightly for the purpose of easy visual recognition of the dark portion. For this reason, as illustrated in FIG. 8, sometimes the HDR video displayed by the HDR display device is seen dark compared with the SDR video that is displayed while adjusted in the second display mode using the SDR signal.

As illustrated in FIG. 8, the HDR signal is steeper than the SDR signal in a curve indicating correspondence between a code value and the luminance. Consequently, when the luminance is multiplied by a coefficient in order to adjust the luminance of the HDR signal, although the luminance is largely changed like ΔL1 illustrated in the part (a) of FIG. 2A in a bright portion (high-luminance region), the change in luminance is smaller compared with ΔL1 like ΔL2 illustrated in the part (a) of FIG. 2A in the dark portion (low-luminance region). In FIG. 2A, although ΔL2 is enlarged, it is seen that ΔL2 is smaller than ΔL1 even if ΔL2 is enlarged. That is, even if the adjustment (adjustment for multiplying the luminance by a constant) similar to the adjustment performed on the SDR signal is performed on the HDR signal, a variation width of the luminance varies between the dark portion and the bright portion of the HDR signal, and the video is distorted.

As described above, in the conventional technology, it is difficult to effectively adjust the luminance of the HDR video, and it is difficult to display the HDR video on the display device without failure. The present disclosure discloses an adjusting device, an adjusting method, and a program for being capable of effectively adjusting the HDR video signal indicating the HDR video that is produced using the HDR-compatible OETF having the PQ characteristic or the HLG characteristic.

Hereinafter, exemplary embodiments are described in detail with reference to the drawings as appropriate. However, detailed descriptions that are more than necessary are sometimes omitted. For example, the detailed description of an already known matter and the overlapping description of a substantially identical configuration may sometimes be omitted. This is to avoid unnecessary redundancy in the following description and to facilitate understanding of those skilled in the art.

The accompanying drawings and the following exemplary embodiments are provided for those skilled in the art to fully understand the present disclosure, and only indicate an example of the present disclosure. Numerical values, shapes, materials, constituent elements, arrangement positions and connection modes of the constituent elements, steps, and order of the steps illustrated in the following exemplary embodiments are merely examples, and therefore are not intended to limit the scope of the claims. Among constituent elements in the following exemplary embodiments, a constituent element that is not described in an independent claim indicating the highest concept is a constituent element that can be added to the constituent element described in the independent claim in any way.

Each drawing is not exactly illustrated, but some of the drawings are schematic diagrams simplified as appropriate for the purpose of illustrating the present disclosure in an easily understood manner. In the drawings, a substantially identical constituent element is designated by the identical reference mark, and the description is sometimes omitted or simplified.

### (First exemplary embodiment)

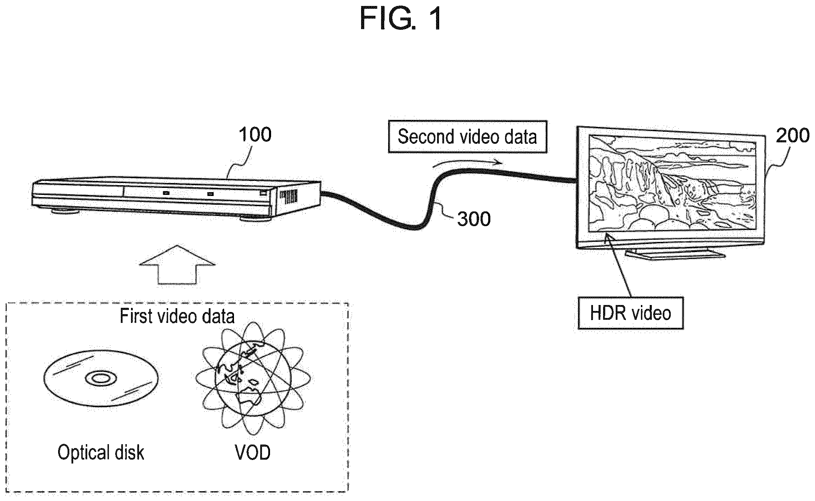

A first exemplary embodiment will be described below with reference to FIGS. 1 to 9.

### [1-1. Configuration]

FIG. 1 is a view schematically illustrating an example of a configuration of AV system 1 according to a first exemplary embodiment.

As illustrated in FIG. 1, AV system 1 includes adjusting device 100 and display device 200. Adjusting device 100 and display device 200 are communicably connected to each other by cable 300 compatible with a digital interface (for example, High-Definition Multimedia Interface (HDMI) (registered trademark)). Adjusting device 100 and display device 200 is connected to each other using the digital interface, and connection configuration between adjusting device 100 and display device 200 may be a wired or wireless manner.

Adjusting device 100 is a source device, for example, a playback device (such as Ultra High Definition (HD) Blu-ray (registered trademark) player) that plays back video data recorded in an optical disk. Adjusting device 100 may be an Ultra HD Blu-ray (registered trademark) player or a set top box (STB), which receives HDR-compatible video data distributed through a network by video on demand (VOD) and provides the received video data to display device 200. Adjusting device 100 acquires first video data from an optical disk or VOD, converts a first video signal included in the acquired first video data into a second video signal, and outputs second video data including the second video signal obtained by the conversion to display device 200 through cable 300.

Display device 200 is a sink device, for example, a TV (hereinafter, referred to as "HDR TV") that can display HDR video. Display device 200 acquires the second video data through cable 300, and displays video (HDR video) of the second video signal included in the acquired second video data.

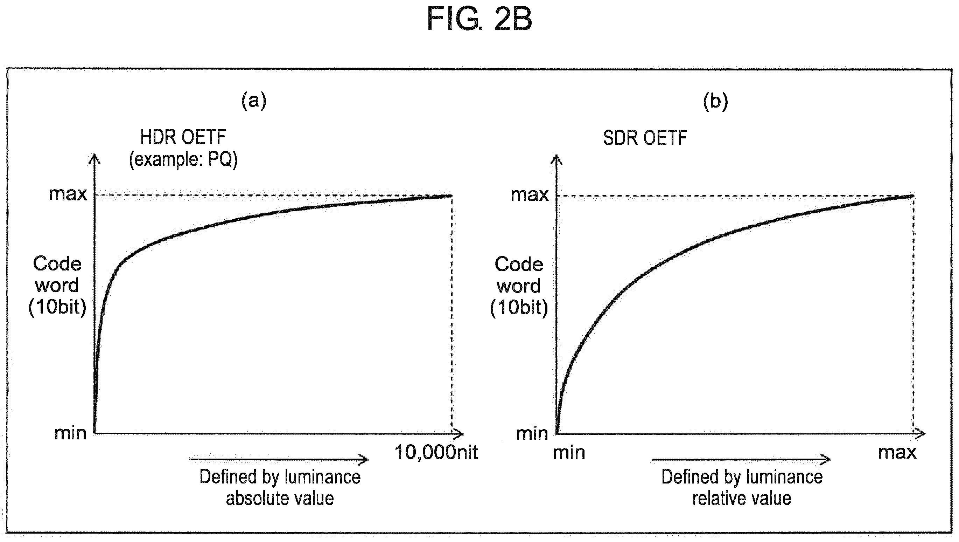

EOTF will be described below with reference to FIGS. 2A and 2B.

FIG. 2A is a view illustrating an example of the EOTF compatible with each of the HDR and the SDR. A part (a) of FIG. 2A is a view illustrating an example (PQ curve) of the HDR-compatible EOTF, and a part (b) of FIG. 2A is a view illustrating an example (gamma curve) of the SDR-compatible EOTF.

As illustrated in FIG. 2A, the EOTF indicates correspondence between a code value and a luminance value, and is used to convert the code value into the luminance value. That is, the EOTF is relation information indicating a correspondence relation between a plurality of code values and the luminance value.

FIG. 2B is a view illustrating an example of the OETF compatible with each of the HDR and the SDR. A part (a) of FIG. 2B is a view illustrating an example (the inverse characteristic of the PQ curve) of the HDR-compatible OETF, and a part (b) of FIG. 2B is a view illustrating an example (the inverse characteristic of the gamma curve) of the SDR-compatible OETF.

The OETF indicates correspondence between the luminance value and the code value, and is used to convert the luminance value into the code value contrary to the EOTF. That is, the OETF is relation information indicating a correspondence relation between the luminance value and a plurality of code values. For example, in the case that the luminance value of the HDR-compatible video is expressed by the code value of 10-bit gradation, the luminance value in an HDR luminance range up to 10,000 nit is quantized and mapped in 1024 integer values from 0 to 1023. That is, the luminance value is quantized based on the OETF, whereby the luminance value (the luminance value of the HDR-compatible video) in the luminance range up to 10,000 nit is converted into the HDR signal that is the 10-bit code value. In the HDR-compatible EOTF (hereinafter, referred to as "HDR EOTF") or the HDR-compatible OETF (hereinafter, referred to as "HDR OETF"), the luminance value higher than that of the SDR-compatible EOTF (hereinafter, referred to as "SDR EOTF") or the SDR-compatible OETF (hereinafter, referred to as "SDR OETF") can be expressed. For example, a maximum value (peak luminance) of the luminance of the HDR is 10,000 nit in the examples in FIGS. 2A and 2B. That is, the HDR includes whole luminance of the SDR, and the maximum value of the luminance of the HDR is higher than the maximum value of the luminance of the SDR. The HDR is a dynamic range where the maximum value of the luminance is enlarged from 100 nit that is the maximum value of the luminance of the SDR to the maximum value (for example, 10,000 nit) of the luminance of the HDR.

In the first exemplary embodiment, the first video signal is the HDR signal compatible with the HDR. A post-grading image is converted into the non-linear first video signal by using the HDR OETF (see the part (a) of FIG. 2B), and image coding or the like is performed based on the first video signal to generate a video stream. For example, during the playback of the first video signal, display device 200 converts a decoding result of the stream into a linear signal using the HDR EOTF (see the part (a) of FIG. 2A), and displays the HDR video based on the linear signal.

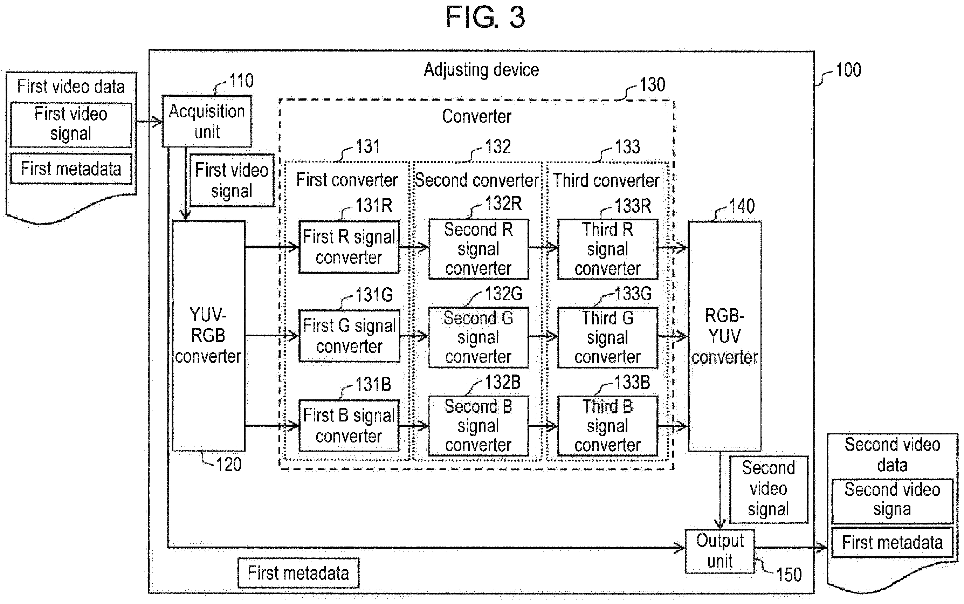

FIG. 3 is a block diagram schematically illustrating an example of a functional configuration of adjusting device 100 in the first exemplary embodiment.

As illustrated in FIG. 3, adjusting device 100 includes acquisition unit 110, YUV-RGB converter 120, converter 130, RGB-YUV converter 140, and output unit 150.

Acquisition unit 110 acquires the first video data including the non-linear first video signal generated by the first OETF. The first video signal is an HDR video signal.

As described above, for example, acquisition unit 110 may acquire the first video data by playing back the first video data recorded in the optical disk, or acquire the first video data by receiving the HDR-compatible first video data distributed through a network or a broadcast wave. The first video data may include first metadata indicating a characteristic of the first video signal in addition to the first video signal. That is, acquisition unit 110 may acquire the first metadata together with the first video signal. For example, acquisition unit 110 may be constructed with an optical disk drive that reads and play backs data recorded in the optical disk, or constructed with a communication interface that is connected to a content provider through a network such as the Internet. Acquisition unit 110 may be constructed with a tuner that receives the broadcast wave.

A specific example of the first metadata will be described in a second exemplary embodiment.

YUV-RGB converter 120 converts the video signal constructed with a YUV signal into an RGB signal. YUV-RGB converter 120 converts the first video signal from the YUV signal into the RGB signal, and outputs a first R signal, a first G signal, and a first B signal, which are obtained by the conversion and constitute the first video signal. YUV-RGB converter 120 may be constructed with a processor that executes a program and a memory in which the program is recorded, or a dedicated circuit (for example, a circuit including an integrated circuit (IC) or a large scale integration (LSI)).

Converter 130 performs conversion processing of converting the first video signal included in the first video data acquired by acquisition unit 110 into the non-linear second video signal. At this point, the second video signal is a signal obtained (i) by converting the first video signal into a linear signal using the inverse characteristic of the first OETF, (ii) by performing adjusting processing including a gain change in which a relationship between an input value and an output value becomes linear on the linear signal, and (iii) by converting a post-adjustment linear signal obtained by performing the adjusting processing using the second OETF corresponding to a predetermined format. In the first exemplary embodiment, converter 130 converts the first video signal into the second video signal constructed with a second R signal, a second G signal, and a second B signal by performing the conversion processing on the first R signal, the first G signal, and the first B signal, which are obtained by the conversion into the RGB signal by YUV-RGB converter 120.

Specifically, converter 130 includes first converter 131, second converter 132, and third converter 133.

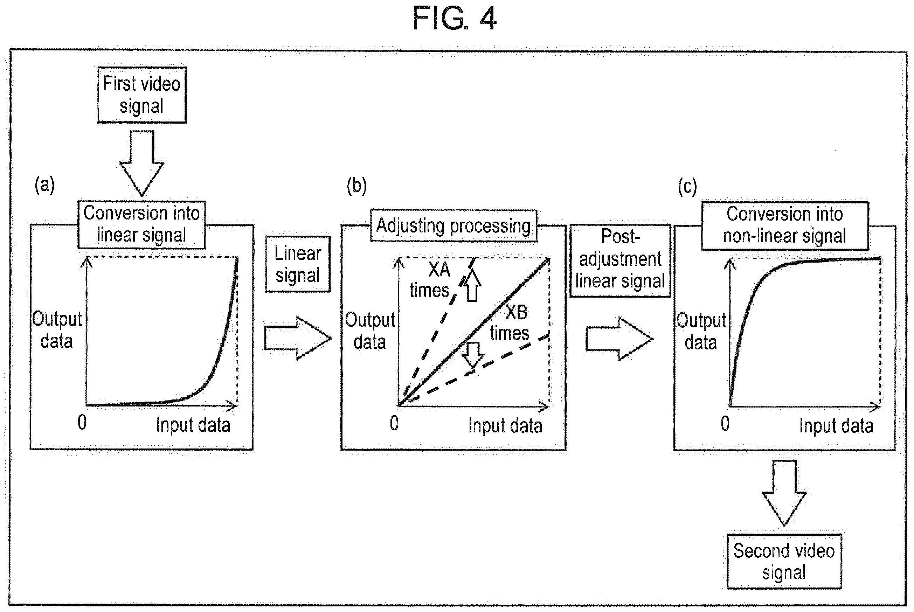

FIG. 4 is a schematic diagram illustrating the conversion processing performed by first converter 131, second converter 132, and third converter 133 of converter 130 of the first exemplary embodiment.

As illustrated in a part (a) of FIG. 4, first converter 131 converts the first video signal acquired by acquisition unit 110 into the linear signal using the inverse characteristic of the first OETF. In the first exemplary embodiment, first converter 131 includes first R signal converter 131R, first G signal converter 131G, and first B signal converter 131B that convert the first R signal, the first G signal, and the first B signal into the linear signals using the inverse characteristic of the first OETF, respectively.

As illustrated in a part (b) of FIG. 4, second converter 132 performs the adjusting processing on the linear signal obtained by first converter 131. The adjusting processing is processing of performing the gain change in which the relationship between the input value and the output value becomes linear on the linear signal obtained by first converter 131. That is, in the adjusting processing, the gain change is performed such that the input value is multiplied by A (A > 1) or such that the input value is multiplied by B (B ≤ 1). In the adjusting processing, the gain change is performed on all the linear signals. In the first exemplary embodiment, second converter 132 includes second R signal converter 132R, second G signal converter 132G, and second B signal converter 132B that perform the adjusting processing on the linear signals that are obtained by the conversion of the first R signal, the first G signal, and the first B signal using the inverse characteristic of the first OETF.

As illustrated in a part (c) of FIG. 4, third converter 133 converts the post-adjustment linear signal obtained by the adjusting processing performed by second converter 132 into the second video signal using the second OETF. In the first exemplary embodiment, third converter 133 includes third R signal converter 133R, third G signal converter 133G, and third B signal converter 133B that convert RGB of the post-adjustment linear signals constructed with the RGB signals using the second OETF, respectively. As a result of the conversion using the second OETF in third converter 133, third R signal converter 133R outputs a second R signal, third G signal converter 133G outputs a second G signal, and third B signal converter 133B outputs a second B signal. Each of the second R signal, the second G signal, and the second B signal, which are output from third converter 133, is a signal constituting the second video signal.

The first video signal input to converter 130 may be the HDR signal having the PQ characteristic or the HDR signal having the HLG characteristic. In the case that the first video signal is the HDR signal having the PQ characteristic, the first OETF becomes the inverse characteristic of the PQ EOTF, so that first converter 131 converts the non-linear first video signal into the linear signal using the PQ EOTF as the inverse characteristic of the first OETF. In the case that the first video signal is the HDR signal having the HLG characteristic, the first OETF becomes the HLG OETF, so that first converter 131 converts the non-linear first video signal into the linear signal using the inverse characteristic of the HLG OETF as the inverse characteristic of the first OETF.

The second video signal output from converter 130 may be the HDR signal having the PQ characteristic or the HDR signal having the HLG characteristic. For example, converter 130 may output the HDR signal having the characteristic compatible with display device 200. In the case that the HDR signal having the PQ characteristic is output as the second video signal, third converter 133 generates the non-linear second video signal using the inverse characteristic of the PQ EOTF as the second OETF. In the case that the HDR signal having the HLG characteristic is output as the second video signal, third converter 133 generates the non-linear second video signal using the HLG OETF as the second OETF. Thus, in the first exemplary embodiment, the predetermined format may be the PQ or the HLG, and the second OETF corresponding to the predetermined format may be the inverse characteristic of the PQ EOTF or the HLG OETF.

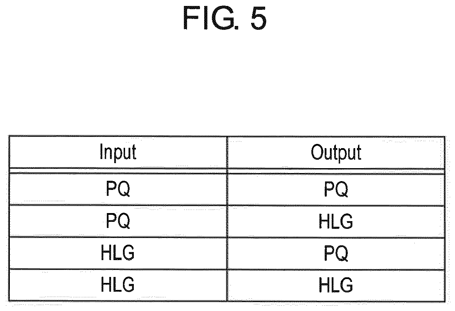

In this way, as illustrated in FIG. 5, four combinations are considered as a combination of the characteristic of the HDR signal input to converter 130 and the characteristic of the HDR signal output from converter 130. FIG. 5 is a view illustrating a combination of the characteristic of the HDR signal input to adjusting device 100 and the characteristic of the HDR signal output from adjusting device 100 in the first exemplary embodiment.

For example, converter 130 may be constructed with a processor that executes a program and a memory in which the program is recorded, or a dedicated circuit (for example, a circuit including an IC or an LSI).

RGB-YUV converter 140 converts the video signal constructed with the RGB signal into the YUV signal. RGB-YUV converter 140 converts the second video signal output from third converter 133 from the RGB signal into the YUV signal. Consequently, RGB-YUV converter 140 outputs the second video signal constructed with the YUV signal obtained by the conversion. For example, RGB-YUV converter 140 may be constructed with a processor that executes a program and a memory in which the program is recorded, or a dedicated circuit (for example, a circuit including an IC or an LSI).

Output unit 150 outputs the second video signal obtained by the conversion performed by RGB-YUV converter 140. In the first exemplary embodiment, output unit 150 outputs the second video data including the second video signal and the first metadata. For example, output unit 150 may be constructed with a digital interface.

### [1-2. Operation]

An operation of adjusting device 100 configured as described above will be described below.

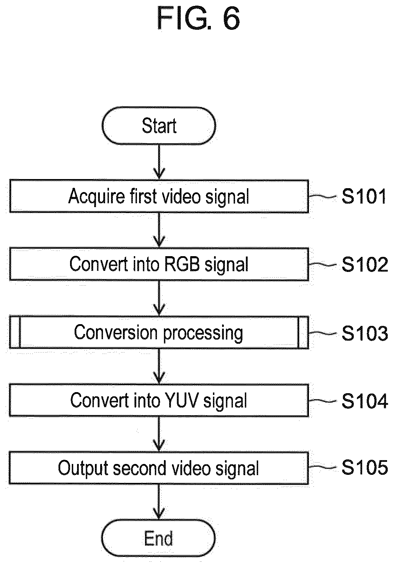

FIG. 6 is a flowchart illustrating an example of the operation (adjusting method) of adjusting device 100 in the first exemplary embodiment.

In adjusting device 100, acquisition unit 110 acquires the first video signal (step S101).

YUV-RGB converter 120 converts the first video signal acquired by acquisition unit 110 from the YUV signal into the RGB signal (step S102).

Converter 130 performs the conversion processing of converting the first video signal into the second video signal constructed with the second R signal, the second G signal, and the second B signal by performing the adjusting processing on the first R signal, the first G signal, and the first B signal, which constitute the first video signal and are obtained by the conversion into the RGB signal by YUV-RGB converter 120 (step S103).

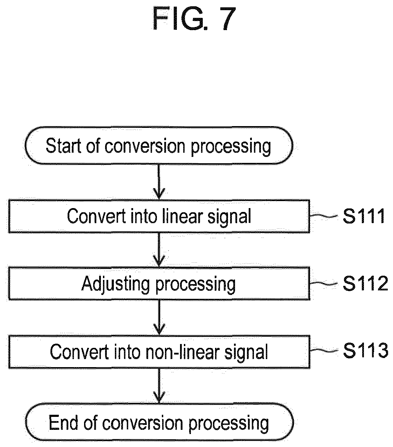

The detailed conversion processing in step S103 will be described with reference to FIG. 7.

FIG. 7 is a flowchart illustrating an example of the conversion processing of the first exemplary embodiment.

In the conversion processing, first converter 131 of converter 130 converts the first video signal into the linear signal using the inverse characteristic of the first OETF (step Sill).

Second converter 132 of converter 130 performs the adjusting processing on the linear signal obtained by first converter 131 (step S112).

Third converter 133 of converter 130 converts the post-adjustment linear signal obtained by the adjusting processing performed by second converter 132 into the non-linear second video signal using the second OETF (step S113).

As described above, in converter 130, the second video signal constructed with the RGB signal is obtained by performing the conversion processing in steps S111 to S113 on the first video signal constructed with the RGB signal.

The description will be continued with reference to FIG. 6. When the converter 130 ends the conversion processing, RGB-YUV converter 140 converts the second video signal from the RGB signal into the YUV signal (step S104).

Output unit 150 outputs the second video signal obtained by the conversion performed by RGB-YUV converter 140 (step S105).

### [1-3. Effect and the like]

As described above, the adjusting device of the first exemplary embodiment includes the acquisition unit that acquires the non-linear first video signal generated using the first OETF, the converter that performs the conversion processing of converting the first video signal acquired by the acquisition unit into the non-linear second video signal obtained (i) by converting the first video signal into the linear signal using the inverse characteristic of the first OETF, (ii) by performing the adjusting processing including the gain change in which the relationship between the input value and the output value becomes linear on the linear signal, and (iii) by converting the post-adjustment linear signal obtained by performing the adjusting processing using the second OETF corresponding to the predetermined format, and the output unit that outputs the second video signal obtained by the conversion performed by the converter.

The adjusting method of the first exemplary embodiment is the adjusting method performed by the adjusting device that converts the first video signal into the second video signal and outputs the second video signal, the first video signal being not linear and generated by using the first OETF. In the adjusting method, the first video signal is acquired, the first video signal acquired by the acquisition is converted into the second video signal, the second video signal being not linear and obtained (i) by converting the first video signal into the linear signal using the inverse characteristic of the first OETF, (ii) by performing the adjusting processing including the gain change in which the relationship between the input value and the output value becomes linear on the linear signal, and (iii) by converting the post-adjustment linear signal obtained by performing the adjusting processing using the second OETF corresponding to the predetermined format, and the second video signal obtained by the conversion is output.

Adjusting device 100 is an example of the adjusting device. Acquisition unit 110 is an example of the acquisition unit. Converter 130 is an example of the converter. Output unit 150 is an example of the output unit. The flowchart in FIG. 6 is an example of the adjusting method performed by the adjusting device.

For example, adjusting device 100 of the first exemplary embodiment includes acquisition unit 110, converter 130, and output unit 150. Acquisition unit 110 acquires the non-linear first video signal generated by the first OETF. Converter 130 performs the conversion processing of converting the first video signal acquired by acquisition unit 110 into the non-linear second video signal. The non-linear second video signal is obtained (i) by converting the first video signal into the linear signal using the inverse characteristic of the first OETF, (ii) by performing the adjusting processing including a gain change in which the relationship between the input value and the output value becomes linear on the linear signal, and (iii) by converting the post-adjustment linear signal obtained by performing the adjusting processing using the second OETF corresponding to the predetermined format. Output unit 150 outputs the second video signal that is obtained by the conversion of the first video signal in converter 130.

In the adjusting device, the converter may include the first converter that converts the first video signal obtained by the acquisition unit into the linear signal using the inverse characteristic of the first OETF, the second converter that performs the adjusting processing on the linear signal obtained by the first converter, and the third converter that converts the post-adjustment linear signal obtained by the adjusting processing performed by the second converter into the second video signal using the second OETF.

First converter 131 is an example of the first converter. Second converter 132 is an example of the second converter. Third converter 133 is an example of the third converter.

For example, in adjusting device 100 of the first exemplary embodiment, converter 130 includes first converter 131, second converter 132, and third converter 133. First converter 131 converts the first video signal acquired by acquisition unit 110 into the linear signal using the inverse characteristic of the first OETF. Second converter 132 performs the adjusting processing on the linear signal obtained by first converter 131. Third converter 133 converts the post-adjustment linear signal obtained by the adjusting processing performed by second converter 132 into the second video signal using the second OETF.

The adjusting device 100 configured as described above converts the first video signal into the linear signal, adjusts the luminance of the video by performing the gain change on the linear signal, converts the post-adjustment linear signal into the non-linear second video signal, and output the non-linear second video signal. That is, because the linear signal corresponding to the first video signal is adjusted, adjusting device 100 can perform the adjustment such that a variation in luminance is reduced in a dark portion and a bright portion. Consequently, for example, in the case that the dark portion of the video is hardly visually recognized in a bright audiovisual environment, the luminance of the video can be increased with good balance, and the luminance of the video can effectively be brightened.

In the adjusting device, the first video signal and the second video signal may be the HDR video signal.

For example, in adjusting device 100 of the first exemplary embodiment, the first video signal and the second video signal are the HDR video signal.

In adjusting device 100 configured as described above, in the case that the video signal is the HDR signal compatible with the HDR, the HDR signal in which the luminance of the video is properly adjusted can be output. Consequently, display device 200 can easily display the HDR video in which the luminance is effectively adjusted.

The adjusting device may further include the YUV-RGB converter that converts the video signal constructed with the YUV signal into the RGB signal and the RGB-YUV converter that converts the video signal constructed with the RGB signal into the YUV signal. The YUV-RGB converter may convert the first video signal from the YUV signal into the RGB signal. The converter may convert the first video signal into the second video signal constructed with the second R signal, the second G signal, and the second B signal by performing the conversion processing on the first R signal, the first G signal, and the first B signal, which constitute the first video signal and are obtained by the conversion into the RGB signal by YUV-RGB converter. The RGB-YUV converter may convert the second video signal obtained by converting the first video signal by the converter from the RGB signal into the YUV signal.

YUV-RGB converter 120 is an example of the YUV-RGB converter. RGB-YUV converter 140 is an example of the RGB-YUV converter.

For example, in the first exemplary embodiment, adjusting device 100 further includes YUV-RGB converter 120 and RGB-YUV converter 140. YUV-RGB converter 120 converts the video signal constructed with the YUV signal into the RGB signal. RGB-YUV converter 140 converts the video signal constructed with the RGB signal into the YUV signal. YUV-RGB converter 120 converts the first video signal from the YUV signal into the RGB signal. Converter 130 converts the first video signal into the second video signal constructed with the second R signal, the second G signal, and the second B signal by performing the conversion processing on the first R signal, the first G signal, and the first B signal, which constitute the first video signal and are obtained by the conversion into the RGB signal by YUV-RGB converter 120. RGB-YUV converter 140 converts the second video signal obtained by converting the first video signal by converter 130 from the RGB signal into the YUV signal.

Because the conversion processing is performed on the RGB signal, adjusting device 100 configured as described above can adjust the luminance of the video in which a relationship (RGB ratio) among colors of each pixel constituting the video is maintained.

In the adjusting device, the first video signal and the second video signal may have the PQ characteristic or the HLG characteristic.

For example, in adjusting device 100 of the first exemplary embodiment, the first video signal and the second video signal have the PQ characteristic or the HLG characteristic.

Adjusting device 100 configured as described above can easily convert the first video signal having the PQ characteristic or the HLG characteristic into the second video signal having the PQ characteristic or the HLG characteristic. Consequently, converter 130 can properly perform the conversion processing according to the HDR characteristic of the video signal and the characteristic of the HDR with which display device 200 is compatible.

The adjusting device may be connected to the display device by the digital interface. The output unit may output the second video signal to the display device through the digital interface.

Cable 300 compatible with HDMI (registered trademark) is an example of the digital interface.

For example, in the first exemplary embodiment, adjusting device 100 is connected to display device 200 by cable 300. Output unit 150 outputs the second video signal to display device 200 through cable 300.

### [1-4. Modification of first exemplary embodiment]

In the first exemplary embodiment, by way of example, converter 130 performs the gain change in which the relationship between the input value and the output value of the linear signal becomes linear on the whole region of the linear signal as the adjusting processing. However, the present disclosure is not limited to the first exemplary embodiment.

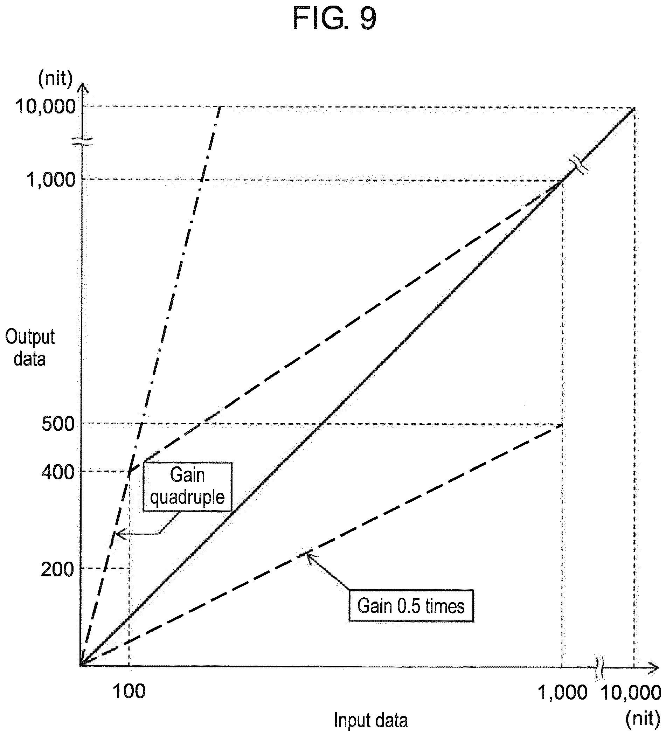

FIG. 9 is a view illustrating an example of the adjusting processing of the first exemplary embodiment.

For example, in the case that the gain change in which the gain is multiplied by four to increase the luminance is performed in the adjusting processing as illustrated in FIG. 9, the gain change in which the output value becomes four times with respect to all the input values generates the following problem. That is, although the dark portion of the video can be displayed while brightened by the gain change, because the bright portion of the video is the originally bright region, the luminance in the bright portion becomes larger than or equal to a maximum luminance value with which the display device can perform the display by the gain change, the whole region where the luminance is larger than or equal to the maximum luminance is displayed with the identical luminance value. For this reason, display device 200 cannot properly display the gradation of the video in the region.

As illustrated in FIG. 9, in the case that the conversion is performed so as to increase the gain, converter 130 may perform the gain change in which the relationship between the input value and the output value becomes linear on the input value in a range less than a predetermined threshold (in the example of FIG. 9, 100 nit) of the linear signal. In this case, converter 130 may perform monotonic increase conversion in which the relationship between the input value and the output value becomes a monotonic increase on the input value in a range larger than or equal to the predetermined threshold.

For example, the monotonic increase conversion may be conversion in which the relationship between the input value and the output value becomes a straight line as illustrated in FIG. 9. That is, in the adjusting processing, conversion may be performed using a knee curve in which a slope becomes A in the range less than the predetermined threshold while a slope becomes B smaller than A in the range larger than or equal to the predetermined threshold. For example, the monotonic increase conversion may be conversion in which the relationship between the input value and the output value becomes a curve line such as a logarithmic curve.

In the adjusting processing, the maximum output value corresponding to the maximum input value may be the peak luminance of the video (content) of the first video data, the maximum luminance value that can be displayed by display device 200, or predetermined luminance (for example, 500 nit or 1,000 nit).

In the adjusting processing, in the case that the gain is set to a value smaller than 1 (for example, 0.5 times) to lower the output value compared with the input value as illustrated in FIG. 9, a phenomenon in which the luminance value of the video is saturated is hardly generated in the case that the adjusting processing of increasing the gain to the value larger than 1 to raise the output value compared with the input value. Consequently, the adjusting processing of lowering the output value with respect to all the input values may be performed.

### (Second exemplary embodiment)

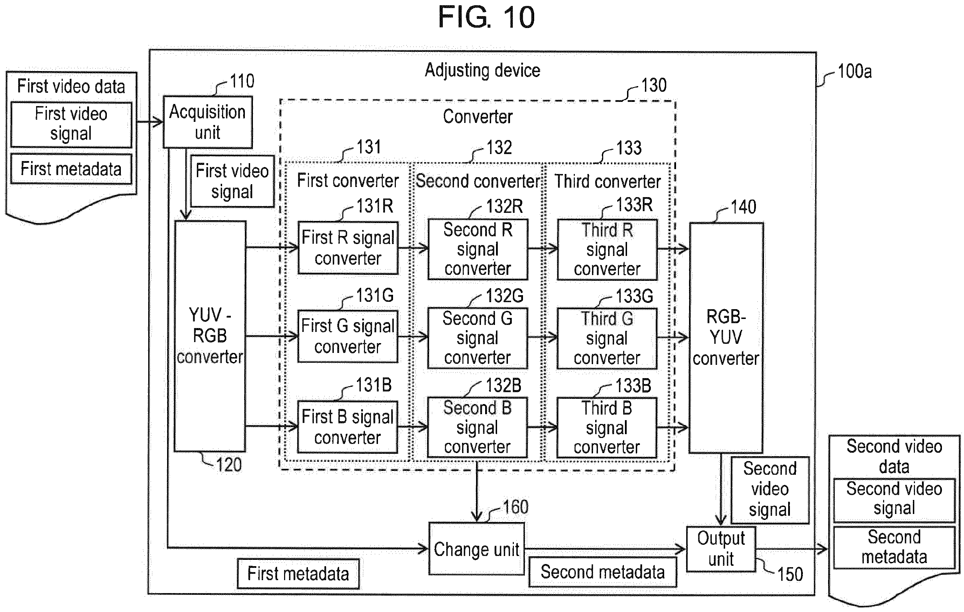

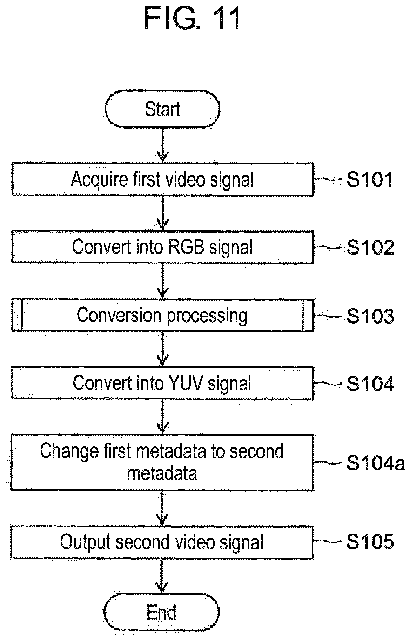

A second exemplary embodiment will be described below with reference to FIGS. 10 and 11. In the following exemplary embodiments including the second exemplary embodiment, the component substantially identical to the component of the first exemplary embodiment will be designated by an identical numeral, and the description will be omitted.

### [2-1. Configuration]

FIG. 10 is a block diagram schematically illustrating an example of a functional configuration of adjusting device 100a in the second exemplary embodiment.

The configuration of adjusting device 100a in the second exemplary embodiment is substantially identical to the configuration of adjusting device 100 described in the first exemplary embodiment with reference to FIG. 3, and the detailed description will be omitted. However, adjusting device 100a of the second exemplary embodiment differs from adjusting device 100 of the first exemplary embodiment in that adjusting device 100a further includes change unit 160.

Change unit 160 changes the first metadata acquired by acquisition unit 110 to second metadata indicating the characteristic of the second video signal obtained by converting the first video signal in converter 130. That is, change unit 160 changes the first metadata associated with the first video data according to a conversion content of the first video signal in converter 130. Change unit 160 outputs the second metadata obtained by changing the first metadata to output unit 150. For example, change unit 160 may be constructed with a processor that executes a program and a memory in which the program is recorded, or a dedicated circuit (for example, a circuit including an IC or an LSI).

At this point, for example, the first metadata may be a maximum content light level (MaxCLL) or a maximum frame-average light level (MaxFALL).

The MaxCLL means a value indicating the maximum luminance of the pixel in all the frames of the content. The MaxFALL means a value indicating the maximum value of average luminance in the frame in all the frames of the content.

That is, the first metadata may include at least one of a first maximum luminance value that is the maximum luminance value (MaxCLL) of the pixels included in the whole video (all the frames in the content) of the first video signal and a first maximum frame average luminance value that is the maximum value (MaxFALL) of the average luminance of each of a plurality of frames (all the frames in the content) constituting the video of the first video signal.

Thus, when changing the first metadata to the second metadata, change unit 160 may perform at least one of (i) a change from the first maximum luminance value to a second maximum luminance value that is the maximum luminance value of the pixels included in the whole video (all the frames in the content) of the second video signal and (ii) a change from the first maximum frame average luminance value to a second maximum frame average luminance value that is the maximum value of the average luminance of each of the plurality of frames (all the frames in the content) constituting the video of the second video signal. Although change unit 160 changes the metadata when the MaxCLL and the MaxFALL are changed in the first video signal and the second video signal, change unit 160 may not change the metadata when the MaxCLL and the MaxFALL are not changed.

The first metadata may be static metadata except for MaxCLL and MaxFALL. For example, the first metadata may be metadata associated with the luminance of the video like the maximum luminance value of a master monitor that is used to generate master video from which the first video data is generated.

Output unit 150 outputs data including the second video signal and the second metadata as the second video data.

### [2-2. Operation]

An operation of adjusting device 100a configured as described above in the second exemplary embodiment will be described below with reference to FIG. 11.

FIG. 11 is a flowchart illustrating an example of the operation (adjusting method) of adjusting device 100a in the second exemplary embodiment. In FIG. 11, step of performing the operation substantially identical to the operation in step of the flowchart in FIG. 6 is designated by an identical numeral, and the description of the step will be omitted.

An adjusting method of the second exemplary embodiment is substantially identical to the adjusting method of the first exemplary embodiment in FIG. 6, so that the detailed description will be omitted. However, the adjusting method of the second exemplary embodiment differs from the adjusting method of the first exemplary embodiment in that step S104a is added after step S104. Other steps in the adjusting method are similar to those of the first exemplary embodiment.

After step S104, change unit 160 changes the first metadata acquired by acquisition unit 110 to second metadata indicating the characteristic of the second video signal obtained by converting the first video signal in converter 130 (step S104a).

When step S104a is ended, step S105 in the adjusting method of the first exemplary embodiment is performed.

### [2-3. Effect and the like]

As described above, in the adjusting device of the second exemplary embodiment, the acquisition unit may further acquire the first metadata indicating the characteristic of the first video signal. The adjusting device may further include the change unit that changes the first metadata acquired by the acquisition unit to the second metadata indicating the characteristic of the second video signal. The output unit may output the second video signal and the second metadata.

Adjusting device 100a is an example of the adjusting device. Change unit 160 is an example of the change unit.

For example, in adjusting device 100a of the second exemplary embodiment, acquisition unit 110 further acquires the first metadata indicating the characteristic of the first video signal. Adjusting device 100a further includes change unit 160. Change unit 160 changes the first metadata acquired by acquisition unit 110 to second metadata indicating the characteristic of the second video signal obtained by converting the first video signal in converter 130. Output unit 150 outputs the second video data including the second video signal and the second metadata.

According to a result of the conversion processing in converter 130, adjusting device 100a configured as described above changes the first metadata of the first video signal to the second metadata, and outputs the second metadata obtained by the change to display device 200. That is, adjusting device 100a can output the second metadata indicating the characteristic of the second video signal to display device 200, so that adjusting device 100a can easily cause display device 200 to properly display the second video signal.

In the adjusting device, the first metadata may include at least one of the first maximum luminance value that is the maximum luminance value of the pixels included in the whole video of the first video signal and the first maximum frame average luminance value that is the maximum value of the average luminance of each of the plurality of frames constituting the video of the first video signal. The change unit may perform at least one of (i) the change from the first maximum luminance value to the second maximum luminance value that is the maximum luminance value of the pixels included in the whole video of the second video signal and (ii) the change from the first maximum frame average luminance value to the second maximum frame average luminance value that is the maximum value of the average luminance of each of the plurality of frames constituting the video of the second video signal.

For example, in adjusting device 100a of the second exemplary embodiment, the first metadata includes at least one of a first maximum luminance value that is the maximum luminance value (MaxCLL) of the pixels included in the whole video (all the frames in the content) of the first video signal and the first maximum frame average luminance value that is the maximum value (MaxFALL) of the average luminance of each of a plurality of frames (all the frames in the content) constituting the video of the first video signal. Change unit 160 performs at least one of (i) a change from the first maximum luminance value to the second maximum luminance value that is the maximum luminance value of the pixels included in the whole video (all the frames in the content) of the second video signal and (ii) a change from the first maximum frame average luminance value to the second maximum frame average luminance value that is the maximum value of the average luminance of each of the plurality of frames (all the frames in the content) constituting the video of the second video signal.

Adjusting device 100a configured as described above can change at least one of the MaxCLL and the MaxFALL to a proper value in the post-conversion second video signal. Thus, adjusting device 100a can easily cause display device 200 to properly display the second video signal.

### (Third exemplary embodiment)

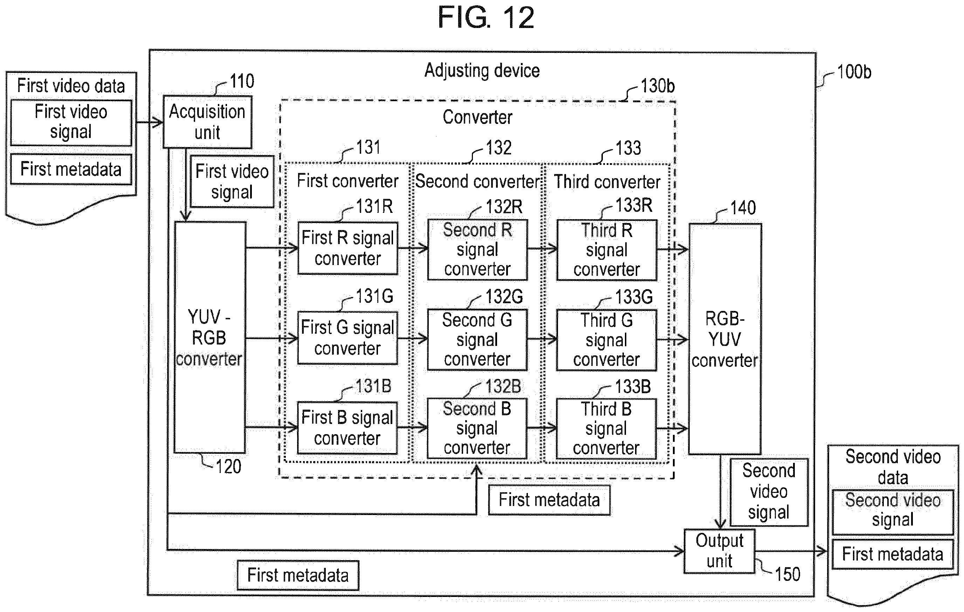

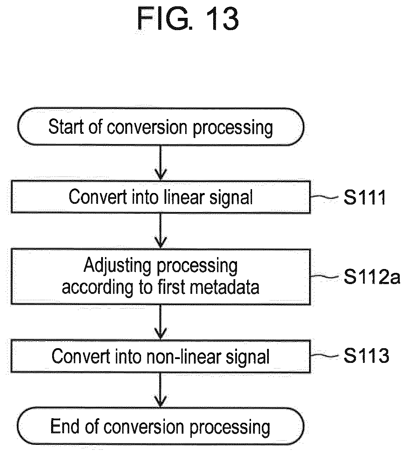

A third exemplary embodiment will be described below with reference to FIGS. 12 and 13.

### [3-1. Configuration]

FIG. 12 is a block diagram schematically illustrating an example of a functional configuration of adjusting device 100b in the third exemplary embodiment.

The configuration of adjusting device 100b in the third exemplary embodiment is substantially identical to the configuration of adjusting device 100 described in the first exemplary embodiment with reference to FIG. 3, so that the detailed description will be omitted. However, adjusting device 100b of the third exemplary embodiment differs from adjusting device 100 of the first exemplary embodiment in that the first metadata included in the first video data acquired by acquisition unit 110 is output to converter 130b and that converter 130b performs the conversion processing according to the first metadata.

Converter 130b converts the first video signal into the second video signal according to the first metadata. At this point, the first metadata includes the static metadata described in the second exemplary embodiment. The first metadata includes at least one of the maximum luminance value of the master monitor that is used to generate the master video from which the video of the first video signal is generated and the first maximum luminance value that is the maximum luminance value (MaxCLL) of the pixels included in the whole video (all the frames in the content) of the first video signal. The second video signal is a signal that is obtained by the adjusting processing performed by second R signal converter 132Rb, second G signal converter 132Gb, and second B signal converter 132Bb, which are included in second converter 132b, such that the luminance of the second video signal becomes less than or equal to one of the maximum luminance value of the master monitor and the first maximum luminance value (MaxCLL), the one of the maximum luminance value of the master monitor and the first maximum luminance value being included in the first metadata. That is, specifically, when converting the first video signal into the second video signal, second converter 132b of converter 130b may perform the adjusting processing such that the luminance of the second video signal becomes less than or equal to one of the maximum luminance value of the master monitor and the first maximum luminance value, the one of the maximum luminance value of the master monitor and the first maximum luminance value being included in the first metadata. For example, as illustrated in the modification of the first exemplary embodiment, second converter 132b of converter 130b may perform the conversion using the knee curve in which the slope becomes A in the range less than the predetermined threshold while the slope becomes B smaller than A in the range larger than or equal to the predetermined threshold. When performing the conversion using the knee curve, second converter 132b of converter 130b may perform the adjusting processing such that the maximum luminance value included in the first metadata is maintained.

The first metadata may be dynamic metadata, and include the maximum luminance value of each of a plurality of scenes constituting the video of the first video signal.

In this case, the second video signal is a signal that is obtained by the adjusting processing performed by second converter 132b such that the luminance of the second video signal becomes less than or equal to the maximum luminance value of the scene included in the first metadata with respect to each of the plurality of scenes. That is, when converting the first video signal into the second video signal with respect to each of the plurality of scenes constituting the video of the first video signal, converter 130b may perform the adjusting processing such that the luminance of the second video signal becomes less than or equal to the maximum luminance value of the scene included in the first metadata.

### [3-2. Operation]

An operation of adjusting device 100b configured as described above in the third exemplary embodiment will be described below with reference to FIG. 13.

An adjusting method of the third exemplary embodiment is substantially identical to the adjusting method of the first exemplary embodiment in FIG. 6, so that the detailed description will be omitted. However, the adjusting method of the third exemplary embodiment differs from the adjusting method of the first exemplary embodiment in a part of the conversion processing in step S103 of FIG. 7. Therefore, only a different point of the conversion processing will be described below.

FIG. 13 is a flowchart illustrating an example of the conversion processing of the third exemplary embodiment. In FIG. 13, step of performing the operation substantially identical to the operation in step of the flowchart in FIG. 7 is designated by an identical numeral, and the description will be omitted.

In the conversion processing of the third exemplary embodiment, step S112a is performed instead of step S112 of the conversion processing of the first exemplary embodiment in FIG. 7. The conversion processing of the third exemplary embodiment differs from the conversion processing of the first exemplary embodiment in that point. Other steps in the conversion processing are similar to those of the first exemplary embodiment.

After step S111, converter 130b performs the adjusting processing according to the first metadata (step S112a). In converter 130b of the third exemplary embodiment, second converter 132b performs the adjusting processing.

### [3-3. Effect and the like]

As described above, in the adjusting device of the third exemplary embodiment, the acquisition unit may further acquire the first metadata indicating the characteristic of the first video signal. The converter may convert the first video signal into the second video signal according to the first metadata acquired by the acquisition unit.

In the adjusting device, the first metadata may include at least one of the maximum luminance value of the master monitor that is used to generate the master video from which the video of the first video signal is generated and the first maximum luminance value that is the maximum luminance value of the pixels included in the whole video of the first video signal. The second video signal may be a signal that is obtained by performing the adjusting processing such that the luminance of the second video signal becomes less than or equal to one of the maximum luminance value of the master monitor and the first maximum luminance value, the one of the maximum luminance value of the master monitor and the first maximum luminance value being included in the first metadata.

Adjusting device 100b is an example of the adjusting device. Converter 130b is an example of the converter.

For example, in adjusting device 100b of the third exemplary embodiment, acquisition unit 110 further acquires the first metadata indicating the characteristic of the first video signal. Converter 130b converts the first video signal into the second video signal according to the first metadata acquired by acquisition unit 110.

The first metadata includes at least one of the maximum luminance value of the master monitor that is used to generate the master video from which the video of the first video signal is generated and the first maximum luminance value that is the maximum luminance value (MaxCLL) of the pixels included in the whole video (all the frames in the content) of the first video signal. The second video signal is a signal that is obtained by performing the adjusting processing such that the luminance of the second video signal becomes less than or equal to one of the maximum luminance value of the master monitor and the first maximum luminance value (MaxCLL), the one of the maximum luminance value of the master monitor and the first maximum luminance value (MaxCLL) being included in the first metadata.

For example, adjusting device 100b configured as described above can perform the conversion using the knee curve while the maximum luminance value of the first video signal is maintained in the second video signal, so that adjusting device 100b can properly adjust the luminance of the video.

In the adjusting device, the first metadata may include the maximum luminance value of each of the plurality of scenes constituting the video of the first video signal. The second video signal may be a signal that is obtained by performing the adjusting processing such that the luminance of the second video signal becomes less than or equal to the maximum luminance value of the scene included in the first metadata with respect to each of the plurality of scenes.

For example, in adjusting device 100b of the third exemplary embodiment, the first metadata includes the maximum luminance value of each of the plurality of scenes constituting the video of the first video signal. The second video signal is a signal that is obtained by performing the adjusting processing such that the luminance of the second video signal becomes less than or equal to the maximum luminance value of the scene included in the first metadata with respect to each of the plurality of scenes.

Adjusting device 100b configured as described above can adjust the second video signal to the proper luminance in each scene.

### (Fourth exemplary embodiment)

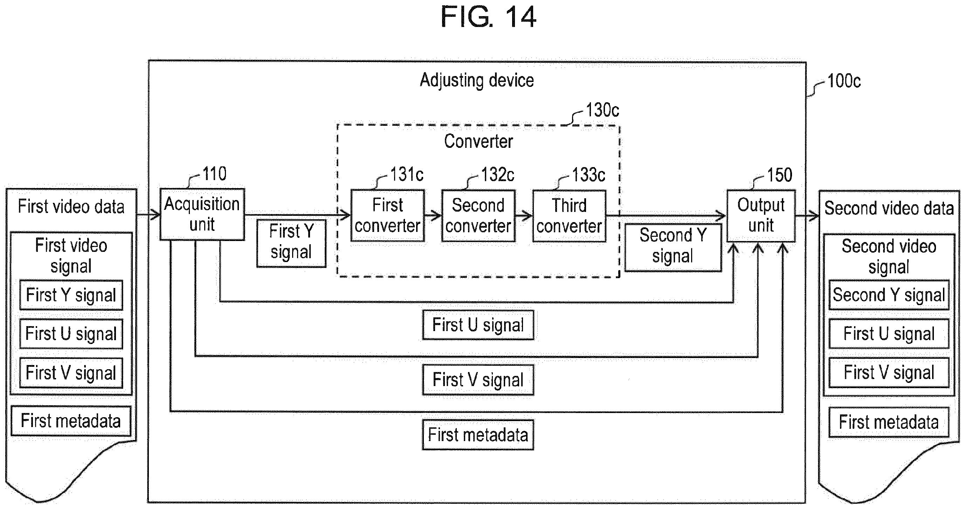

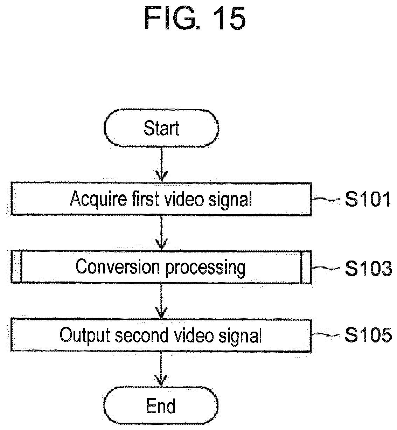

A fourth exemplary embodiment will be described below with reference to FIGS. 14 and 15.

### [4-1. Configuration]

FIG. 14 is a block diagram schematically illustrating an example of a functional configuration of adjusting device 100c in the fourth exemplary embodiment.

The configuration of adjusting device 100c in the fourth exemplary embodiment is substantially identical to the configuration of adjusting device 100 described in the first exemplary embodiment with reference to FIG. 3, so that the detailed description will be omitted. However, adjusting device 100c of the fourth exemplary embodiment differs from adjusting device 100 of the first exemplary embodiment in that adjusting device 100c does not include YUV-RGB converter 120 and RGB-YUV converter 140 and that converter 130c does not include the converter corresponding to each signal of the RGB signal.

Converter 130c performs the conversion processing on a first Y signal indicating a luminance signal in the first video signal constructed with the YUV signal. Specifically, in converter 130c, first converter 131c converts the first Y signal into the linear signal by the operation similar to that of first converter 131 of the first exemplary embodiment, second converter 132c performs the adjusting processing by the operation similar to that of the second converter 132 of the first exemplary embodiment, and third converter 133c performs the conversion into the non-linear signal by the operation similar to that of the third converter 133 of the first exemplary embodiment. Consequently, converter 130c outputs a second Y signal. In the first video signal acquired by acquisition unit 110, a first U signal and a first V signal, which indicate a color difference signal, are output to output unit 150 without the conversion processing performed by converter 130c.

Output unit 150 outputs the second video signal constructed with the second Y signal, the first U signal, and the first V signal.

### [4-2. Operation]

An operation of adjusting device 100c configured as described above in the fourth exemplary embodiment will be described below with reference to FIG. 15.

FIG. 15 is a flowchart illustrating an example of the operation (adjusting method) of adjusting device 100c in the fourth exemplary embodiment. In FIG. 15, step of performing the operation substantially identical to the operation in step of the flowchart in FIG. 6 is designated by an identical numeral, and the description of the step will be omitted.

An adjusting method of the fourth exemplary embodiment is substantially identical to the adjusting method of the first exemplary embodiment in FIG. 6, so that the detailed description will be omitted. However, the adjusting method of the fourth exemplary embodiment differs from the adjusting method of the first exemplary embodiment in that steps S102 and S104 are eliminated. Other steps of the adjusting method are similar to those of the first exemplary embodiment.

That is, in the adjusting method of the fourth exemplary embodiment, the pieces of processing in steps S101, S103, and S105 are performed similarly to those of the first exemplary embodiment. The processing in step S103 of the adjusting method of the fourth exemplary embodiment is performed on the first Y signal of the first video signal constructed with the YUV signal.

### [4-3. Effect and the like]

Adjusting device 100c of the fourth exemplary embodiment performs the conversion processing similar to that of the first exemplary embodiment on the first video signal constructed with the YUV signal. Therefore, in adjusting device 100c, a processing load can be reduced compared with the configuration in which the conversion processing of the first exemplary embodiment is performed on each signal of the RGB signal.

### (Fifth exemplary embodiment)

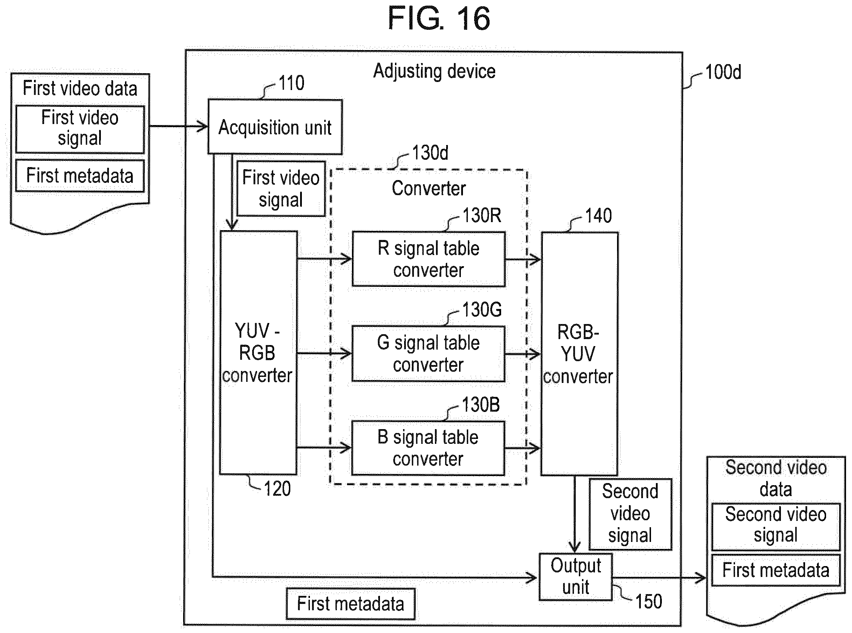

A fifth exemplary embodiment will be described below with reference to FIG. 16.

FIG. 16 is a block diagram schematically illustrating an example of a functional configuration of adjusting device 100d in the fifth exemplary embodiment.

The configuration of adjusting device 100d in the fifth exemplary embodiment is substantially identical to the configuration of adjusting device 100 described in the first exemplary embodiment with reference to FIG. 3, so that the detailed description will be omitted. However, adjusting device 100d of the fifth exemplary embodiment differs from adjusting device 100 of the first exemplary embodiment in that converter 130d does not include first converter 131, second converter 132, and third converter 133, but include R signal table converter 130R, G signal table converter 130G, and B signal table converter 130B.

That is, converter 130d may not separately perform the conversion into the linear signal described in the first exemplary embodiment and other exemplary embodiments, the adjusting processing, and the conversion into the non-linear signal, but perform the conversion into the linear signal described in the first exemplary embodiment and other exemplary embodiments, the adjusting processing, and the conversion using a table involving the conversion into the non-linear signal on each signal of the first video signal constructed with the RGB signal.

### (Other exemplary embodiments)

The first to fifth exemplary embodiments have been described as examples of the technique disclosed in the present disclosure. However, the technique in the present disclosure is not limited to these embodiments, but is applicable to other exemplary embodiments including appropriate modifications, substitutions, additions, or omissions. A new exemplary embodiment can be made by combining some of the constituent elements described in the first to fifth exemplary embodiments.

Accordingly, some other exemplary embodiments will be described below.

In the first to fifth exemplary embodiments, it has been described that adjusting devices 100, 100a to 100d may perform the adjusting processing according to the maximum luminance that can be displayed by display device 200. In this case, adjusting devices 100, 100a to 100d may acquire the displayable maximum luminance from display device 200 through cable 300.

Adjusting devices 100, 100a to 100d of the first to fifth exemplary embodiments may detect ambient (audiovisual environment) illumination using an illumination sensor, and perform the adjusting processing according to the illumination detected by the illumination sensor. In this case, adjusting devices 100, 100a to 100d may perform the conversion in which magnification ("A times" of the first exemplary embodiment) in the gain change is increased with increasing detected illumination in the adjusting processing. Adjusting devices 100, 100a to 100d may include the illumination sensor. Alternatively, display device 200 includes the illumination sensor, and adjusting devices 100, 100a to 100d may acquire the detected value of the illumination sensor from display device 200 through cable 300.

The third exemplary embodiment has been described that adjusting device 100b may perform the adjusting processing in each scene of the video using the dynamic metadata. However, the present disclosure is not limited to this operation. For example, adjusting device 100b of the third exemplary embodiment may dynamically analyze the luminance of the video in each scene, and perform the adjusting processing according to an analysis result.

Converter 130 of adjusting device 100a of the second exemplary embodiment may perform the conversion processing according to the first metadata acquired by acquisition unit 110 similarly to adjusting device 100b of the third exemplary embodiment. Change unit 160 may change the first metadata to the second metadata according to the content of the conversion processing performed according to the first metadata.

In the adjusting device, the converter may perform the adjusting processing such that the luminance of the second video signal becomes less than or equal to a predetermined maximum luminance value. The adjusting device may further include the change unit that changes the first metadata acquired by the acquisition unit to the second metadata indicating the characteristic of the second video signal. The output unit may output the second video signal and the second metadata.

For example, converter 130 of adjusting device 100a of the second exemplary embodiment may perform the adjusting processing such that the luminance of the second video signal becomes less than or equal to a predetermined maximum luminance value. Change unit 160 of adjusting device 100a may change the first metadata acquired by acquisition unit 110 to the second metadata indicating the characteristic of the second video signal. Output unit 150 may output the second video signal and the second metadata.

Examples of the predetermined maximum luminance value may include the peak luminance of the first video signal, the maximum luminance value that can be displayed by display device 200, predetermined luminance (for example, 500 nit or 1,000 nit), the maximum luminance value of the master monitor that is used to generate the master video from which the video of the first video signal is generated, and the first maximum luminance, which are described as the maximum luminance value in the exemplary embodiments, and other luminance values.

In the fifth exemplary embodiment, the processing of converter 130 of the first exemplary embodiment is performed using the table. For example, the processing of converter 130c of the fourth exemplary embodiment may be performed using the table.

Each of the constituent elements of the first to fifth exemplary embodiments may be constructed with dedicated hardware (electronic circuit), or may be implemented by executing a software program suitable for each constituent element using a processor. A program execution unit, such as a central processing unit (CPU) and a processor, reads and executes a software program recorded in a recording medium such as a hard disk and a semiconductor memory, whereby each constituent element may be implemented.

In the exemplary embodiments, division of the functional block in the block diagram is only an example. For example, a plurality of functional blocks may be implemented as one functional block, one functional block may be divided into the plurality of functional blocks, or a part of the functions may be transferred to another functional block. The functions of the plurality of functional blocks may be processed in parallel or in a time-sharing manner by single piece of hardware or software.

Software implementing the adjusting methods of the exemplary embodiments is as follows.

That is, the program causes a computer to perform the adjusting method performed by the adjusting device that adjusts the video displayed on the display device by converting the first video signal into the second video signal, the first video signal being not linear and generated by using the first OETF. The adjusting method includes acquiring the first video signal, converting the first video signal acquired in the acquiring into the second video signal, the second video signal being not linear and obtained (i) by converting the first video signal into the linear signal using the inverse characteristic of the first OETF, (ii) by performing the adjusting processing including the gain change in which the relationship between the input value and the output value becomes linear on the linear signal, and (iii) by converting the post-adjustment linear signal obtained by performing the adjusting processing using the second OETF corresponding to the predetermined format, and outputting the second video signal obtained in the converting.

The adjusting method, the computer program that causes a computer to perform the adjusting method, and computer-readable recording medium in which the program is recorded are included in the scope of the present disclosure. Examples of such computer-readable recording medium include a flexible disk, a hard disk, CD-ROM, MO, DVD, DVD-ROM, DVD-RAM, BD (Blu-ray (registered trademark) disc), and a semiconductor memory. The computer program is not limited to computer program recorded in the above recording medium, but may be transmitted through an electrical communication line, a wireless or wired communication line, or a network represented by the Internet.

A part or all of the constituent elements constituting the above devices may be constructed with an IC card detachably attached to each of the devices, or a single module.

A part or all of the constituent elements constituting the above devices may be constructed with a single-chip LSI.

Each processor is not limited to the LSI or the IC, but may be constructed with a dedicated circuit or a general-purpose processor. Alternatively, each processor may be constructed with a field programmable gate array (FPGA) in which a circuit configuration can be programmed or a reconfigurable processor that can reconfigure connection and setting of circuit cells in the LSI.

The program may be distributed while recorded in a recording medium. For example, the distributed program is installed in the device, and the processor of the device is caused to execute the program, which allows the device to perform various pieces of processing.

The computer program or the digital signal of the present disclosure may be transmitted through an electrical communication line, a wireless or wired communication line, a network such as the Internet, and data broadcasting.

The present disclosure may be implemented by another independent computer system by recording the program or the digital signal in the recording medium and transmitting the program or the digital signal, or by transmitting the program or the digital signal through a network or the like.

In the exemplary embodiments, each piece of processing (each function) may be implemented by centralized processing performed by a single device (system) or distributed processing performed by a plurality of devices.

The exemplary embodiments have been described as examples of the technique in the present disclosure. For this purpose, the accompanying drawings and the detailed description have been provided.

Accordingly, the components described in the accompanying drawings and the detailed description may include not only the constituent elements essential for solving the problem but also constituent elements that are not essential for solving the problem in order to illustrate the technique. For this reason, those inessential constituent elements that are illustrated in the accompanying drawings or are described in the detailed description should not immediately be acknowledged as essential.

The above exemplary embodiments are intended to be illustrative of the technique of the present disclosure, so that various modifications, substitutions, additions, omissions, and others can be made within the scope of the claims or equivalents of the claims.

### INDUSTRIAL APPLICABILITY

The present disclosure is applicable to the adjusting device that can effectively adjust the luminance of the video. Specifically, the present disclosure is applicable to the Ultra HD Blu-ray (registered trademark) player, the STB, and the like.

### REFERENCE MARKS IN THE DRAWINGS

100, 100a, 100b, 100c, 100d: adjusting device
110: acquisition unit
120: YUV-RGB converter
130, 130b, 130c, 130d: converter
130R: R signal table converter
130G: G signal table converter
130B: B signal table converter
131, 131c: first converter
131R: first R signal converter
131G: first G signal converter
131B: first B signal converter
132, 132b, 132c: second converter
132R, 132Rb: second R signal converter
132G, 132Gb: second G signal converter
132B, 132Bb: second B signal converter
133, 133c: third converter
133R: third R signal converter
133G: third G signal converter
133B: third B signal converter
140: RGB-YUV converter
150: output unit
160: change unit
200: display device
300: cable

## Claims

1. An adjusting device comprising:
an acquisition unit that acquires a first video signal that is not linear and is generated using a first opto-electronic transfer function (OETF);
a converter that performs conversion processing of converting the first video signal acquired by the acquisition unit into a second video signal that is not linear and is obtained (i) by converting the first video signal into a linear signal using an inverse characteristic of the first OETF, (ii) by performing adjusting processing including a gain change in which a relationship between an input value and an output value becomes linear on the linear signal, and (iii) by converting a post-adjustment linear signal obtained by performing the adjusting processing using a second OETF corresponding to a predetermined format; and
an output unit that outputs the second video signal obtained by a conversion performed by the converter.

2. The adjusting device according to claim 1, wherein the first video signal and the second video signal are a high dynamic range (HDR) video signal.

3. The adjusting device according to claim 1 or 2, further comprising:
a YUV-RGB converter that converts a video signal constructed with a YUV signal into an RGB signal; and
a RGB-YUV converter that converts a video signal constructed with the RGB signal into the YUV signal,
wherein the YUV-RGB converter converts the first video signal from the YUV signal into the RGB signal,
the converter converts the first video signal into the second video signal constructed with a second R signal, a second G signal, and a second B signal by performing the conversion processing on a first R signal, a first G signal, and a first B signal, which constitute the first video signal and are obtained by a conversion into the RGB signal by the YUV-RGB converter, and
the RGB-YUV converter converts the second video signal obtained by a conversion of the first video signal by the converter from the RGB signal into the YUV signal.

4. The adjusting device according to any one of claims 1 to 3, wherein the converter includes:
a first converter that converts the first video signal acquired by the acquisition unit into the linear signal using the inverse characteristic of the first OETF;
a second converter that performs the adjusting processing on the linear signal obtained by the first converter; and
a third converter that converts the post-adjustment linear signal obtained by the adjusting processing performed by the second converter into the second video signal using the second OETF.

5. The adjusting device according to any one of claims 1 to 4, wherein the first video signal and the second video signal have a perceptual quantization (PQ) characteristic or a hybrid log-gamma (HLG) characteristic.

6. The adjusting device according to any one of claims 1 to 5, further comprising a change unit,
wherein the acquisition unit acquires first metadata indicating a characteristic of the first video signal,
the change unit changes the first metadata acquired by the acquisition unit to second metadata indicating a characteristic of the second video signal, and
the output unit outputs the second video signal and the second metadata.

7. The adjusting device according to claim 6, wherein the first metadata includes at least one of a first maximum luminance value that is a maximum luminance value of pixels included in whole video of the first video signal and a first maximum frame average luminance value that is a maximum value of average luminance of each of a plurality of frames constituting video of the first video signal, and
the change unit performs at least one of (i) a change from the first maximum luminance value to a second maximum luminance value that is a maximum luminance value of pixels included in the whole video of the second video signal and (ii) a change from the first maximum frame average luminance value to a second maximum frame average luminance value that is a maximum value of the average luminance of each of the plurality of frames constituting the video of the second video signal.

8. The adjusting device according to any one of claims 1 to 5, wherein the acquisition unit further acquires first metadata indicating a characteristic of the first video signal, and
the converter converts the first video signal into the second video signal according to the first metadata obtained by the acquisition unit.

9. The adjusting device according to claim 8, wherein the first metadata includes at least one of a maximum luminance value of a master monitor that is used to generate master video from which video of the first video signal is generated and a first maximum luminance value that is a maximum luminance value of pixels included in whole video of the first video signal, and
the second video signal is a signal that is obtained by performing the adjusting processing such that the luminance of the second video signal becomes less than or equal to one of the maximum luminance value of the master monitor and the first maximum luminance value, the one of the maximum luminance value of the master monitor and the first maximum luminance value being included in the first metadata.

10. The adjusting device according to claim 8, wherein the first metadata includes a maximum luminance value of each of a plurality of scenes constituting video of the first video signal, and
the second video signal is a signal that is obtained by performing the adjusting processing such that the luminance of the second video signal becomes less than or equal to the maximum luminance value of a scene included in the first metadata with respect to each of the plurality of scenes.

11. The adjusting device according to claim 8, further comprising a change unit that changes the first metadata acquired by the acquisition unit to second metadata indicating a characteristic of the second video signal,
wherein the converter performs the adjusting processing such that the luminance of the second video signal becomes less than or equal to a predetermined maximum luminance value, and
the output unit outputs the second video signal and the second metadata.

12. The adjusting device according to any one of claims 1 to 11, wherein the adjusting device is connected to a display device by a digital interface, and
the output unit outputs the second video signal to the display device through the digital interface.

13. An adjusting method performed by an adjusting device that converts a first video signal into a second video signal and outputs the second video signal, the first video signal being not linear and generated using a first opto-electronic transfer function (OETF), the adjusting method comprising:
acquiring the first video signal;
converting the first video signal acquired in the acquiring into the second video signal, the second video signal being not linear and obtained (i) by converting the first video signal into a linear signal using an inverse characteristic of the first OETF, (ii) by performing adjusting processing including a gain change in which a relationship between an input value and an output value becomes linear on the linear signal, and (iii) by converting a post-adjustment linear signal obtained by performing the adjusting processing using a second OETF corresponding to a predetermined format; and
outputting the second video signal obtained in the converting.

14. A program causing a computer to perform the adjusting method according to claim 13.
